# EUROPÄISCHE PATENTSCHRIFT

(11) **EP 2 077 523 B1**
(45) Veröffentlichungstag und Bekanntmachung des Hinweises auf die Patenterteilung: **26.09.2012**
(21) Anmeldenummer: 08000001.1
(22) Anmeldetag: 02.01.2008
(51) Int. Cl.: G06Q 30/00, H04L 29/08

(54) **Verfahren zur Ermittlung von relevanten Informationen**
Method for determining relevant information
Procédé destiné à l'établissement d'informations pertinentes

(43) Veröffentlichungstag der Anmeldung: 08.07.2009
(73) Patentinhaber: HURRA Communications GmbH, 70599 Stuttgart (DE)
(72) Erfinder: Schweier, René, 70599 Suttgart (DE)
(74) Vertreter: Dreiss

(56) Entgegenhaltungen:
- EP-A- 1 484 696
- WO-A-2004/042525
- US-B1- 6 771 290

## Beschreibung

Die Erfindung betrifft ein Verfahren zur Auswahl von von einem Informationsserver an eine Menge von Benutzern zu übermittelnden Informationen, bei dem die Reaktionen ausgewertet werden und eine Relevanz der jeweiligen Information ermittelt wird. Die Erfindung betrifft ferner einen Server zur Auswahl von an eine Menge von Benutzern zu ermittelnden Informationen, wobei der Server Mittel zur Auswertung der erfassten Reaktionen und zur Ermittlung einer Relevanz der jeweiligen Information aufweist.

Die Erfindung betrifft auch ein Computerprogramm, das auf einem Server, insbesondere einem Informationsserver in einem Client-Serversystem, ablauffähig ist.

Als Server wird ein mit einem Kommunikationsnetzwerk verbundener Computer oder eine auf einem derartigen Computer ablaufende Software bezeichnet, die es einem als Client bezeichneten Computer bzw. einer als Client bezeichneten Software ermöglichen, von dem Server bereitgestellte Dienste in Anspruch zu nehmen. Derartige Dienste sind insbesondere das Bereitstellen von Informationen. Informationen bereitstellende Server werden auch als Informationsserver bezeichnet.

Die Informationen werden von dem Server typischerweise an eine Vielzahl von Clients bzw. an eine Vielzahl von Benutzern von Clients übermittelt. Hierzu werden häufig sogenannte Netzwerkseiten verwendet, die von den Clients durch Eingabe einer die Netzwerkseite bezeichnenden Adresse, einer sogenannten URL (Uniform Ressource Locator) angefordert werden. Es ist auch bekannt, Informationen von dem Server an die Clients per E-Mail zu übermitteln. Derartige E-Mails können dann sogenannte Links enthalten, die von einem Client bzw. einem Benutzer des Clients aktiviert werden können, was zu einer Anforderung weiterer Informationen führen kann.

Eine in einer E-Mail enthaltene Information kann beispielsweise eine Bildinformation oder eine Textinformation sein. Informationen sind damit beispielsweise Produktinformationen, Tagesnachrichten, Links zu weiteren Informationen, usw..

Jede Anforderung von Informationen über ein Kommunikationsnetzwerk belastet das Kommunikationsnetzwerk. Deshalb ist es von grundsätzlichem Interesse, die Anzahl der Informationsanforderungen zu reduzieren und dadurch eine Entlastung des Kommunikationsnetzwerks zu erreichen. Da ein signifikanter Anteil der derzeit über das Kommunikationsnetzwerk übermittelten Information von keiner oder nur geringer Relevanz für den Empfänger ist, ist es ein Bestreben, die Übertragung von Informationen, die sich für den anfordernden Benutzer als nicht relevant herausstellen, zu reduzieren. Hierzu ist es bekannt, sogenannte Suchmaschinen bereitzustellen, die die Eingabe eines Suchbegriffs durch einen Benutzer ermöglichen und somit automatisch möglichst relevante Informationen heraussuchen. Dadurch wird eine mehrmalige Anforderung von irrelevanten Informationen reduziert. Damit wird also erreicht, dass ein Benutzer nicht eine Vielzahl von Informationsanforderungen an einen oder mehrere Server richten muss, nur um festzustellen, dass die beispielsweise auf einer zunächst vielversprechend klingenden Web-Site dargestellten Informationen oder die einem aktivierbaren Link zugeordneten Informationen doch von keiner oder nur geringer Relevanz für den Benutzer des anfordernden Clients sind.

Um eine explizite Anforderung von Informationen zu reduzieren ist es auch bekannt, allgemein als relevant eingestufte Informationen beispielsweise in Form eines sogenannten Newsletters an eine Benutzergruppe zu versenden, die einen derartigen Newsletter abonniert hat. Um hierbei für eine möglichst große Anzahl von Benutzern relevante Informationen zu übermitteln, wird vielfach eine Vielzahl von Informationen zusammen in einem Newsletter an jeden der Benutzer übermittelt. Dieser muss dann die für ihn relevanten Informationen herausfinden. Hierbei wird wieder das Kommunikationsnetzwerk durch die Übertragung einer Vielzahl von nichtrelevanten Informationen belastet.

Aus US 6 771 290 B1 ist ein Verfahren bekannt mittels dessen Informationen ausgewählt, an einen ausgewählten Benutzer einer Software übermittelt und dem Benutzer dargestellt werden. In einem ersten Schritt des bekannten Verfahrens werden anhand von demographischen Benutzerdaten relevante Informationen ausgewählt und dem Benutzer übermittelt. In einem zweiten Schritt wird die Reaktion des Benutzers auf die übermittelten Informationen ausgewertet. Durch Festlegung spezieller Auswahlkriterien bezüglich der ausgewählten Benutzer, denen eine Information übermittelt wird, bzw. der durch die ausgewählten Benutzer gebildeten Benutzergruppen, und den auszuwertenden Reaktionen, kann eine Relevanz der Information ermittelt werden.

Aufgabe der Erfindung, die durch die unabhängigen Ansprüche gelost wird, ist es, eine Möglichkeit bereitzustellen, um eine weitere Steigerung der Relevanz zu erreichen und damit eine Belastung des Kommunikationsnetzwerks nochmals zu reduzieren.

Die Aufgabe wird durch ein Verfahren der eingangs genannten Art dadurch gelöst, dass zunächst automatisch mindestens zwei unterschiedliche Informationen aus einer vorgebbaren Menge von möglichen Informationen ausgewählt werden. Eine solche Auswahl kann beispielsweise mittels eines Zufallsprinzips erfolgen. Eine derartige Auswahl kann auch in Abhängigkeit von eine Aktualität beschreibenden Parametern erfolgen, so dass möglichst aktuelle Informationen ausgewählt werden können.

Es wird dann automatisch die erste Information an eine erste Untermenge der Benutzer übermittelt. Ebenso wird die zweite Information an eine zweite Untermenge der Benutzer übermittelt. Hierbei kann vorgesehen sein, dass der Umfang der ersten Untermenge und der zweiten Untermenge vorgegeben wird und beispielsweise jeweils durch eine prozentuale Angabe bezüglich des Umfangs der Gesamtmenge von Benutzern beschrieben wird.

Es wird dann eine Reaktion der Benutzer, die die erste Information erhalten haben, und der Benutzer, die die zweite Information erhalten haben, von dem Server erfasst. Dies erfolgt zumindest so lange, bis ein vorgebbares Ereignis eingetreten ist. Ein derartig vorgebbares Ereignis kann beispielsweise eine Zeitspanne sein, die seit Absenden der ersten bzw. der zweiten Information verstrichen ist.

Die erfassten Reaktionen werden dann automatisch ausgewertet und es wird eine Relevanz der jeweiligen Information ermittelt. Eine Reaktion der Benutzer kann beispielsweise die Aktivierung eines zusammen mit der ersten Information oder der zweiten Information dargestellten Links sein, die seinerseits eine Anforderung von weiterführenden Informationen veranlasst. Die Relevanz der ersten Information könnte hierbei als das Verhältnis der Anzahl der Übersendungen der ersten Information zu den erfassten Reaktionen auf die erste Information sein. Ebenso könnte die Relevanz der zweiten Information als das Verhältnis der Anzahl der übermittelten zweiten Informationen zu den erfassten Reaktionen auf die zweiten Informationen sein.

Selbstverständlich könnte jeder Information eine Mehrzahl von möglichen Reaktionen zugeordnet sein. Beispielsweise könnte einer Information ein weiterer Link zugeordnet sein, wobei durch Aktivieren des weiteren Links dem Server mitgeteilt wird, dass der Benutzer an derartigen Informationen nicht interessiert ist. Derartige Reaktionen könnten bei der Bestimmung der Relevanz selbstverständlich besonders gut und gegebenenfalls ergänzend berücksichtigt werden. Grundsätzlich sind eine Vielzahl von Verfahren zur Bestimmung der Relevanz einer dargestellten Information vom Markt her bekannt. Diese können hier vorteilhafterweise eingesetzt werden.

Automatisch wird dann an weitere Benutzer der Gesamtmenge, die damit zumindest implizit eine dritte Untermenge der Gesamtmenge darstellen, die Information übermittelt, die die höchste Relevanz hat. Die dritte Untermenge kann beispielsweise alle Benutzer der Gesamtmenge umfassen, die nicht der ersten Untermenge und nicht der zweiten Untermenge angehören.

Das erfindungsgemäße Verfahren ermöglicht es damit, automatisch die Relevanz von Informationen zu erhöhen, die an eine Menge von Benutzern zu übermitteln ist. Eine derartige Menge von Benutzern sind beispielsweise die Abonnenten eines Newsletters. Die mittels des Newsletters zu übermittelnden Informationen werden nun erfindungsgemäß während der Auslieferung des Newsletters bezüglich der möglichen Relevanz optimiert. Eine Optimierung des Inhalts des Newsletters kann dann insbesondere auch unabhängig von dem Zeitpunkt der Versendung der Newsletter erfolgen.

Beispielsweise kann der Newsletter an zumindest einige Benutzer versendet werden zu einem Zeitpunkt, an dem das Kommunikationsnetzwerk typischerweise eher gering belastet ist. Dies kann beispielsweise nachts oder in den frühen Morgenstunden der Fall sein. Wird der Newsletter schließlich von den ersten Benutzern geöffnet, so kann deren Reaktion auf den Newsletter ausgewertet werden. In Abhängigkeit von der Auswertung kann dann eine Optimierung erfolgen. Insbesondere wenn der Inhalt des Newsletters Links zu weiteren Informationen enthält und eine Optimierung dieser weiteren Informationen mittels des erfindungsgemäßen Verfahrens erreicht werden soll, kann der Newsletter bereits an alle Benutzer zu dem Zeitpunkt übermittelt werden, an dem das Kommunikationsnetzwerk eher gering belastet ist. Der Newsletter wird dann wieder zu unterschiedlichen Zeitpunkten von den Benutzern geöffnet und es wird dann mittels des Links automatisch die Information an den Benutzer übermittelt. Hierbei sind zunächst mindestens zwei unterschiedliche Informationen für die Übermittlung vorgesehen. Es wird dann die Reaktion der Benutzer auf die unterschiedlichen Informationen ausgewertet. Sobald eine ausreichende Anzahl von Reaktionen ausgewertet worden ist, kann der Inhalt der Links dahingehend optimiert werden, dass dieser für alle weiteren Benutzer zumindest solange auf die optimierten Informationen zeigt, bis eine weitere Optimierung durchgeführt wird. Wird derselbe Link dann von weiteren Benutzern aktiviert oder wird der Newsletter von weiteren Benutzern geöffnet, so wird die optimierte Information an die weiteren Benutzer übermittelt. Die Benutzer, von denen eine Reaktion erfasst worden ist bis eine ausreichende Anzahl von Reaktionen für eine aussagekräftige Auswertung vorliegt auf deren Grundlage eine (erste) Optimierung durchgeführt werden kann, bilden dann die erste Untermenge der Benutzer. Die gleichen Vorteile ergeben sich auch bei anderen Arten der Informationsübermittlung, beispielsweise mittels eines Online-Katalogs, bei dem die Inhalte weiterer Seiten in Abhängigkeit von einer aktuellen Optimierung aktualisiert werden.

Die mittels des Newsletters übermittelten Informationen können beispielsweise Kurzzusammenfassungen von Nachrichten sein. Damit lassen sich automatisch die höchst relevanten Schlagzeilen ermitteln, so dass während der Auslieferung des Newsletters der Newsletter dahingehend optimiert wird, dass dieser nur oder genau die höchst relevanten Schlagzeilen umfasst. Es werden also automatisch während einer Kampagne zur Auslieferung eines Newsletters zunächst mindestens zwei unterschiedliche Versionen des Newsletters erzeugt, wobei die Versionen sich in mindestens einer Information - der bisher als erste Information und als zweite Information bezeichneten Informationen - unterscheiden. Diese unterschiedlichen Versionen werden automatisch an ebenfalls automatisch gebildete Untermengen der Gesamtmenge übermittelt. Sobald eine Relevanz ermittelt worden ist, wird der Newsletter bezüglich der darin enthaltenen Informationen optimiert und die optimierte Version wird - gemäß einer möglichen Ausführungsform - an die verbliebenen Benutzer übermittelt.

Hierbei kann vorgesehen sein, dass zusammen mit der an die dritte Untermenge der Gesamtmenge zu übermittelnden höchst relevanten Informationen automatisch weiterführende Informationen übermittelt werden. Diese weiterführenden Informationen sind beispielsweise Informationen, die im Sinne einer Reaktion auf die erste Information oder die zweite Information von den Benutzern, die den Newsletter bereits erhalten haben, angefordert worden sind. Es wird also die Tatsache ausgenutzt, dass auch die weiterführenden Informationen von hoher Relevanz sind und diese deshalb auch von den Benutzern der dritten Untermenge besonders häufig angefordert werden.

Vorteilhafterweise wird die weiterführende Information folglich - beispielsweise in dem optimierten Newsletter - bereits zusammen mit der höchst relevanten Information an die Benutzer der dritten Untermenge der Gesamtmenge übermittelt. Dadurch entfällt die nochmalige Anforderung dieser Information, sowie die separate Übermittlung der weiterführenden Information, wodurch also wieder eine weitere Reduzierung der Belastung des Kommunikationsnetzwerks erfolgt.

Besonders vorteilhaft ist es, wenn das Ereignis, bis zu dessen Eintreten Reaktionen der Benutzer auf den Erhalt der ersten Information und der zweiten Information erfasst werden, den Ablauf einer vorgebbaren Zeitspanne beschreibt. Hierbei können Erfahrungswerte für die vorgebbare Zeitspanne angesetzt werden. Gemäß einer anderen vorteilhaften Ausführungsform kann eine Anzahl von zu erfassenden Reaktionen vorgegeben werden. Diese Anzahl kann insbesondere auch einen prozentualen Anteil der insgesamt zu übermittelnden Informationen bzw. der Anzahl der Gesamtmenge der Benutzer beschreiben.

Besonders vorteilhaft ist es, wenn die Reaktionen zumindest solange erfasst und ausgewertet werden, bis die daraus ermittelten Relevanzen eine vorgebbare Differenz überschreiten. Dies bedeutet, dass erst dann eine Entscheidung für die Übermittlung der höchst relevanten Information an die Benutzer der dritten Untermenge erfolgt, wenn ein klarer Unterschied bezüglich der Relevanz der ersten Information und der Relevanz der zweiten Information erkennbar ist. Hier kann vorgesehen sein, dass die erste Teilmenge und die zweite Teilmenge fast die Gesamtmenge umfassen. Insbesondere wenn nicht nur eine erste und eine zweite Information sondern weitere Informationen an weitere Untermengen übermittelt werden und auch für diese weiteren Informationen Relevanzen ermittelt werden, kann es vorteilhaft sein, sehr lange eine Vielzahl von unterschiedlichen Informationen an die jeweiligen Untermengen zu übersenden, falls keine deutliche Differenz zwischen den ermittelten Relevanzen erkennbar ist. Damit wird die Flexibilität des erfindungsgemäßen Verfahrens nochmals gesteigert, da automatisch erst dann eine optimierte Information an die restlichen Benutzer übermittelt wird, wenn klar erkenntlich ist, welche Information die höchste Relevanz hat.

Vorzugsweise werden die erste Untermenge und die zweite Untermenge automatisch dadurch gebildet, dass die ersten Informationen und die zweiten Informationen zumindest so lange an Benutzer übermittelt werden, bis das Ereignis eintritt, also beispielsweise bis eine vorgegebene Anzahl von Reaktionen erfasst worden sind oder bis eine vorgebbare Zeitspanne abgelaufen ist. Hierbei werden folglich nicht vorab die Umfänge der ersten Untermenge und der zweiten Untermenge in absoluten Benutzerzahlen bestimmt. Vielmehr werden "weiche" Kriterien herangezogen, die einerseits eine möglichst genaue Bestimmung der Relevanz ermöglichen und andererseits auch möglichst rasch die Übermittlung der höchst relevanten Information ermöglicht, so dass die höchst relevante Information an einen möglichst großen Teil der Gesamtmenge der Benutzer übermittelt werden kann.

Vorzugsweise werden die Benutzer der ersten Untermenge und die Benutzer der zweiten Untermenge mittels eines Zufallsverfahrens ausgewählt. Dies ermöglicht eine im Durchschnitt möglichst zuverlässige Ermittlung der Relevanz für unterschiedliche Benutzer von unterschiedlichen Gesamtmengen.

Bei einer besonders vorteilhaften Ausführungsform des erfindungsgemäßen Verfahrens wird, zumindest während die ermittelte höchst relevante Information an die Benutzer der dritten Untermenge übermittelt wird, eine ausgewählte weitere Information an Benutzer einer weiteren Untermenge übermittelt. Es werden auch hier die Reaktionen der Benutzer der weiteren Untermenge erfasst und eine Relevanz dieser Informationen ermittelt. Diese Relevanz wird mit der Relevanz der bisherigen höchst relevanten Information verglichen und falls die Relevanz der weiteren Information höher als die Relevanz der bisherigen höchst relevanten Information ist, wird die weitere Information an die Benutzer der dritten Untermenge übermittelt. Diese Ausführungsform ermöglicht folglich eine weitere Verbesserung bzw. Adaption des erfindungsgemäßen Verfahrens dadurch, dass auch während der Übermittlung der einmal ermittelten höchst relevanten Information quasi parallel hierzu versucht wird, eine weitere Information zu ermitteln, die möglicherweise eine noch höhere Relevanz hat. Hierzu kann aus einer vorgegebenen Menge von zur Verfügung stehenden Informationen beispielsweise per Zufall eine Information ausgewählt werden. Diese wird an Benutzer einer weiteren Untermenge der Gesamtmenge, die beispielsweise als Testmenge bezeichnet werden kann, übermittelt.

Bei dieser Ausführungsform, aber auch bei den anderen vorgenannten Ausführungsformen, kann die weitere Information besonders vorteilhaft unter Berücksichtigung von Profilinformationen von Benutzern der dritten Untermenge ausgewählt werden. Profilinformationen können beispielsweise besondere Interessen der Benutzer beschreiben. Die Profilinformationen können in bekannter Weise beispielsweise von Profilservern zur Verfügung gestellt werden. Derartige Profilinformationen können dadurch erfasst werden, dass Reaktionen der Benutzer auf bereits früher übermittelte Informationen erfasst und ausgewertet werden. Profilinformationen können insbesondere auch durch die Auswertung von Suchbegriffen, die von den Benutzern bei einer Suchmaschine eingegeben worden sind, ermittelt werden. Hierbei werden insbesondere Profilinformationen von Benutzern der dritten Untermenge berücksichtigt, an die noch keine höchst relevante Information übermittelt worden ist. Durch die Berücksichtigung von Profilinformationen lässt sich eine nochmals gesteigerte Relevanz von zu übermittelnden Informationen erreichen.

Vorzugsweise wird eine Information von aktuell höchster Relevanz auch an diejenigen Benutzer der Gesamtmenge übermittelt, an die bereits eine Information mit geringerer Relevanz übermittelt worden ist. Hierbei kann insbesondere vorgesehen sein, dass eine Information mit aktuell höchster Relevanz an diese Benutzer übermittelt wird, wenn die Differenz der aktuell höchsten Relevanz zu der Relevanz der bereits übermittelten Informationen, einen vorgebbaren Schwellenwert überschreitet. Wird mittels des Verfahrens beispielsweise durch Auswertung der Reaktionen einer weiteren Information plötzlich eine deutlich hohe Relevanz der weiteren Information ermittelt, so ermöglicht diese Ausführungsform des erfindungsgemäßen Verfahrens, dass diese ganz besonders relevante Information an alle Benutzer der Gesamtmenge übermittelt wird. Eine derartige Information kann beispielsweise eine aktuelle Nachricht sein. Ist der Server als Online-Shop ausgebildet, so kann eine derartige Information auch eine Produktinformation sein, die ein Produkt bezeichnet, das aktuell zu besonders günstigen Konditionen zum Kauf angeboten wird.

Gemäß einer Weiterbildung des erfindungsgemäßen Verfahrens sind die zur Übermittlung auswählbaren Informationen bezüglich vorgebbarer Kriterien klassifiziert. Die Auswahl einer weiteren Information oder die Auswahl einer ersten oder zweiten Information bei einem erneuten Durchlauf des erfindungsgemäßen Verfahrens erfolgt dann unter Berücksichtigung der Klasse der zuvor ermittelten höchst relevanten Information. Eine Klasse kann beispielsweise die Art der Information oder das Thema der Information beschreiben. War die Information, die während eines Durchlaufs des erfindungsgemäßen Verfahrens als die Information mit höchster Relevanz ermittelt worden ist, eine Nachricht aus der Politik, so kann vorgesehen sein, dass bei einem erneuten Durchlauf des erfindungsgemäßen Verfahrens beispielsweise im Zuge einer erneuten Newsletter-Kampagne, zumindest eine der auszuwählenden Informationen, also beispielsweise zumindest die erste Information, ebenfalls eine Nachricht aus der Politik beschreibt. War die bei einem Durchlauf des erfindungsgemäßen Verfahrens ermittelte höchst relevante Information eine Produktinformation zu einem Bekleidungsstück oder einem elektronischen Gerät, so kann eine erneute Newsletter-Kampagne dadurch gestartet werden, dass dem Benutzer der ersten Untermenge eine Produktinformation zu einem anderen Kleidungsstück oder einem anderen elektronischen Gerät übermittelt wird.

Die Informationen können besonders gut durch eine E-Mail, beispielsweise in Form eines Newsletters, einer sogenannten Landing-page oder in Form von Seiten eines Online-Katalogs, übermittelt werden. Eine Landing-page bezeichnet hierbei eine von einem Server zum Abruf bereitgestellte Netzwerkseite mit dynamischem Inhalt, die an einen Benutzer übermittelt wird, der eine der Landing-page zugeordnete Adresse (URL) angewählt hat, beispielsweise durch Aktivieren eines per E-Mail an den Benutzer übermittelten Links. Das erfindungsgemäße Verfahren ermöglicht hierbei, dass die Informationen auf der Landing-page dynamisch optimiert werden können, so dass jedenfalls den Benutzern der dritten Untermenge besonders relevante Informationen auf der Landing-page angezeigt werden.

Besonders vorteilhaft ist es, wenn die Benutzer der Gesamtmenge dynamisch ermittelt werden. Dies bedeutet, dass während der Durchführung des erfindungsgemäßen Verfahrens einzelne Benutzer zu der Gesamtmenge hinzugenommen werden können und andere Benutzer aus der Gesamtmenge entfernt werden können. Dies ermöglicht eine besonders flexible Durchführung des erfindungsgemäßen Verfahrens, da beispielsweise Benutzer, deren Profilinformationen nicht mit den zu übermittelnden Informationen übereinstimmen, aus der Gesamtmenge während der Durchführung des erfindungsgemäßen Verfahrens entfernt werden können. Ferner können neu erfasste Benutzer beispielsweise in eine aktuell laufende Newsletter-Kampagne aufgenommen werden. Besonders bevorzugt ist es, wenn die Benutzer der dritten Untermenge dynamisch ermittelt werden. Dies ermöglicht es beispielsweise Benutzer, an die bereits eine Information übermittelt worden ist, erneut in die dritte Untermenge aufzunehmen, so dass diesen eine Information von noch höherer Relevanz übermittelt werden kann.

Werden die Informationen in Form von einzelnen Seiten eines Online-Katalogs übermittelt, so kann vorgesehen sein, dass an einen Benutzer, der eine weitere Seite des Online-Katalogs anwählt, stets eine Seite übermittelt wird, die die aktuell als höchst relevant ermittelten Informationen enthält. Mittels des erfindungsgemäßen Verfahrens könnte folglich ein Online-Katalog besonders gut dynamisch erzeugt werden. Selbstverständlich werden Informationen, die dem Benutzer bereits bei der Anforderung von vorherigen Seiten des Katalog angezeigt worden sind, nicht mehr übermittelt. Dieses Verfahren ermöglicht folglich eine dynamische Erzeugung eines Online-Katalogs, wobei sichergestellt ist, dass die Informationen von aktuell höchster Relevanz bei der Anwahl einer weiteren Seite des Online-Katalogs dem Benutzer angezeigt werden.

Eine weitere Verbesserung des erfindungsgemäßen Verfahrens lässt sich dadurch erreichen, dass die Informationen bezüglich möglicher Profilinformationen klassifiziert sind. Die Profilinformationen beschreiben hierbei die von den Benutzern ermittelten Profilinformationen. Für eine Mehrzahl von möglichen Klassen werden dann höchst relevante Informationen ermittelt. Dies bedeutet, dass für unterschiedliche Profilinformationen die Relevanz von diesen Profilinformationen entsprechend den Informationen ermittelt werden und zumindest für jede Klasse eine höchst relevante Information bestimmt wird. Einem Benutzer werden dann zumindest diejenigen höchst relevanten Informationen übermittelt, deren Klasse den dem Benutzer zugeordneten Profilinformationen entsprechen. Einem Benutzer, aus dessen Profil hervorgeht, dass er sehr wohl an kulturellen Informationen, nicht jedoch an politischen Informationen interessiert ist, wird dann eine hoch relevante politische Information nicht übermittelt, wohingegen eine höchst relevante kulturelle Information an den Benutzer übermittelt wird. Ist der Server beispielsweise als Online-Shop ausgebildet und zeigen die Profilinformationen eines Benutzers, dass dieser sich für Kleidungsstücke, nicht jedoch für elektronische Geräte interessiert, so wird diesem Benutzer eine Kleidungsstücke betreffende Produktinformation übermittelt, eine Produktinformation, die elektronische Geräte betrifft, wird diesem Benutzer jedoch nicht übermittelt werden. Dadurch wird eine nochmalige Verringerung der Belastung des Kommunikationsnetzwerks erreicht.

Die Aufgabe wird auch durch einen Server der eingangs genannten Art dadurch gelöst, dass der Server Mittel zur Durchführung des erfindungsgemäßen Verfahrens aufweist.

Von besonderer Bedeutung ist die Realisierung des erfindungsgemäßen Verfahrens in Form eines Computerprogramms. Dabei ist das Computerprogramm auf einem Server, insbesondere auf einem Server in einem Client-Server System ablauffähig und zur Ausführung des erfindungsgemäßen Verfahrens programmiert. Selbstverständlich können zur Ausführung des erfindungsgemäßen Verfahrens Teile des Computerprogramms auf unterschiedlichen Computern, bzw. Servern oder Clients in dem Client-Server System ablaufen. Die Erfindung wird also durch das Computerprogramm realisiert, so dass dieses Computerprogramm in gleicher Weise die Erfindung darstellt, wie das Verfahren, zu dessen Ausführung das Computerprogramm geeignet ist.

Das Computerprogramm ist vorzugsweise auf einem optischen oder magnetischen Speicherelement, beispielsweise einer Festplatte, einem Flash-Speicher, einer CD-ROM oder einer DVD abgespeichert.

Weitere Merkmale, Anwendungsmöglichkeiten und Vorteile der Erfindung sind in der nachfolgenden Beschreibung von Ausführungsbeispielen der Erfindung beschrieben, die in der Zeichnung dargestellt sind. Es zeigen:
- Figur 1: eine schematische Darstellung einer Ausführungsform eines zur Ausführung des erfindungsgemäßen Verfahrens geeigneten Client-Server Systems;
- Figur 2: eine schematische Darstellung eines Ablaufdiagramms des erfindungsgemäßen Verfahrens in einer ersten Ausführungsform; und
- Figur 3: eine schematische Darstellung eines Ablaufdiagramms des erfindungsgemäßen Verfahrens in einer zweiten Ausführungsform.

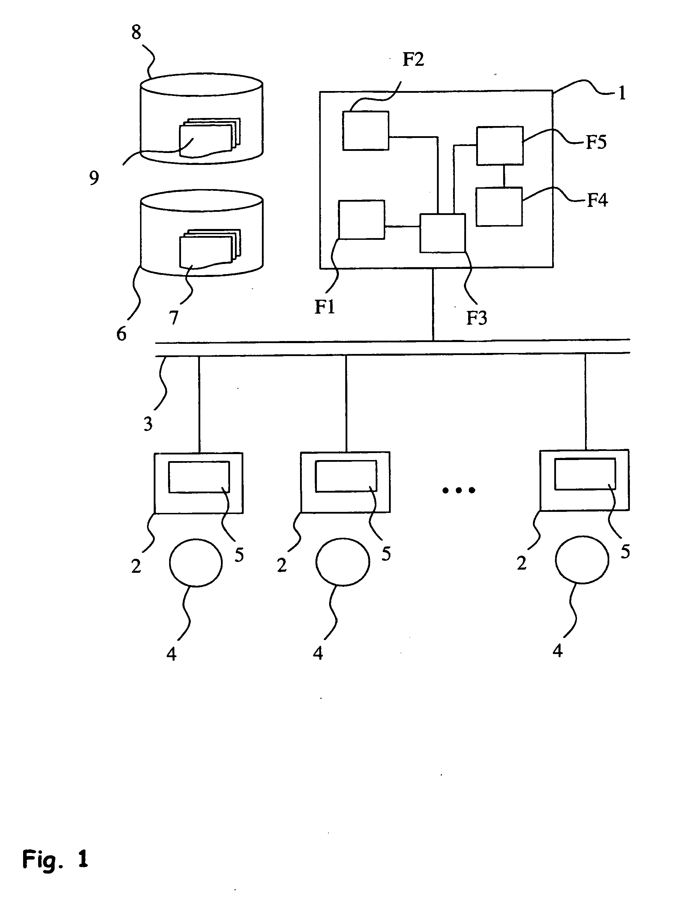

In Figur 1 ist ein Client-Serversystem dargestellt, das einen Server 1 und eine Mehrzahl von Clients 2 umfasst, die mit einem Kommunikationsnetzwerk 3 verbunden sind. Die Clients 2 sind beispielsweise als Desktop- oder Laptop-Computer, PDA (Personal Digital Assistant), Smartphones, Mobiltelefone oder sonstige elektronische Kommunikationsgeräte ausgebildet, die für eine Kommunikation über das Kommunikationsnetzwerk 3, das beispielsweise als das Internet ausgebildet ist, geeignet sind. Die Clients 2 werden von Benutzern 4 bedient. Für die Kommunikation weisen die Clients 2 eine geeignete Software auf, die beispielsweise einen Browser 5 umfasst, der für eine Anforderung von über das Kommunikationsnetzwerk zu übermittelnden Informationen und zur Darstellung von über das Kommunikationsnetzwerk 3 übermittelten Informationen geeignet ist.

Dem Server 1 ist ein erstes Speicherelement zugeordnet, das beispielsweise als Informationsdatenbank 6 ausgebildet ist. In der Informationsdatenbank 6 sind eine Mehrzahl von Informationen 7 abgespeichert.

Dem Server 1 ist ferner ein weiteres Speicherelement zugeordnet, das beispielsweise als Benutzerdatenbank 8 ausgebildet ist. In der Benutzerdatenbank 8 sind Benutzerinformationen 9 abgespeichert, die beispielsweise eine E-Mail-Adresse von Benutzern 4 umfasst und ferner Profilinformationen des jeweiligen Benutzers 4 umfassen können.

Der Server 1 weist ferner Funktionseinheiten auf, die in Figur 1 beispielhaft als Funktionseinheiten F1 bis F5 dargestellt sind. Die Funktionseinheiten F1 bis F5 sind beispielsweise in Software realisiert. Hierbei ermöglicht die Funktionseinheit F1 die Auswahl von in der Informationsdatenbank 6 abgespeicherten Information 7. Eine derartige Auswahl kann beispielsweise nach einem Zufallsprinzip erfolgen. Weitere Auswahlverfahren können insbesondere weitere Auswahlkriterien einbeziehen, wie beispielsweise die Aktualität der auswählbaren Informationen oder - falls die auswählbaren Informationen 7 klassifiziert sind - eine Klasse, die beispielsweise fügbaren Profilinformationen von auswählbaren Benutzern 4 entspricht.

Die Funktionseinheit F2 ermöglicht die Auswahl eines Benutzers 4 aus der Benutzerdatenbank 8. Hierzu wird insbesondere eine einem Benutzer 4 zugeordnete Benutzerinformation 9 ausgewertet, um beispielsweise eine E-Mail-Adresse des Benutzers 4 zu erhalten. Die Benutzerauswahl kann nach einem Zufallsprinzip ausgeführt werden. Insbesondere kann die Benutzerauswahl durch Auswertung verfügbarer Profilinformationen erfolgen, die beispielsweise in den Benutzerinformationen 9 abgespeichert sind. Die Profilinformationen können hierzu vorgegeben werden. Die Profilinformationen können sich jedoch auch aus einer Klasse von verfügbaren Informationen 7 ergeben, die wiederum möglicherweise einer Klasse von Profilinformationen entsprechen, die bei vorherigen Durchläufen des erfindungsgemäßen Verfahrens eine besonders hohe Relevanz gezeigt haben.

Die Funktionseinheit F3 ermöglicht die Übermittlung der ausgewählten Informationen 7 an, die ausgewählten Benutzer 4 der Gesamtmenge. Hierzu erhält die Funktionseinheit 3 eine E-Mail-Adresse von der Funktionseinheit 2 und eine Information 7, die von der Funktionseinheit F1 ausgewählt worden ist. Die Funktionseinheit F3 kann auch derart ausgebildet sein, dass sie eine von einem Benutzer 4 angeforderte Seite eines Online-Katalogs dynamisch generiert, wozu insbesondere eine von der Funktionseinheit F1 ausgewählte Information 7 herangezogen werden kann.

Gemäß einer vorteilhaften Ausführungsform werden zunächst Links zu den Informationen 7 an alle Benutzer 4 der Gesamtmenge übermittelt. Dies erfolgt vorzugsweise zu einem Zeitpunkt, an dem das Kommunikationsnetzwerk eher gering belastet ist. Die erfindungsgemäß Optimierung erfolgt dann, sobald eine ausreichende Anzahl von Links aktiviert, die Informationen 7 übermittelt, die Reaktionen erfasst und ausgewertet worden sind. Es werden dann bei weiteren Aktivierungen der bereits übermittelten Links die optimierten Informationen 7 dargestellt, so dass die Links also zu den aktuell optimierten Informationen 7 verweisen.

Die Funktionseinheit F4 ermöglicht das Empfangen von Reaktionen der Benutzer 4 auf eine von dem Server 1 veranlasste Übermittlung einer Information 7 an den entsprechenden Client 2. Eine derartige Reaktion kann beispielsweise die Aktivierung eines mittels des Browsers 5 dem Benutzer 4 dargestellten Links sein. Ein derartiger Link kann außerdem die Anforderung einer weiteren Information veranlassen. Die Funktionseinheit F4 kann dazu eine Vielzahl von Informationen, die in einer Reaktion enthalten sind, erfassen und auswerten. Derartige Informationen sind beispielsweise in einem Cookie gespeichert, das möglicherweise automatisch zusammen mit der Reaktion von dem Client 2 an den Server 1 übermittelt wird. Ein Cookie enthält beispielsweise Informationen über die letzten Anforderungen von Informationen bei dem Server 1 sowie eine Identifikation des Benutzers 4 bzw. des Clients 2. Eine Reaktion kann ferner eine Information über eine zuvor angeforderte Information, beispielsweise in Form eines sogenannten Referers, enthalten.

Die Funktionseinheit F5 ermöglicht die Ermittlung einer Relevanz. Hierzu wertet die Funktionseinheit F5 die von der Funktionseinheit F4 erhaltenen Informationen bezüglich der empfangenen Reaktionen aus. Eine Relevanz kann beispielsweise dadurch ermittelt werden, dass die absolute Anzahl der erhaltenen Reaktionen bezüglich einer von dem Server übermittelten Information 7 ermittelt wird. Je höher die Anzahl der ermittelten Reaktionen ist, desto höher wird die ermittelte Relevanz dieser Information sein. Eine Relevanz kann auch dadurch ermittelt werden, dass das Verhältnis der Anzahl der Benutzer, an die eine bestimmte Information 7 übermittelt worden ist und die Anzahl der daraufhin erfolgten Reaktionen ermittelt wird. Eine derartige relative Anzahl ermöglicht damit eine einerseits besonders genaue Ermittlung einer Relevanz und andererseits eine Relevanz von hoher Aktualität.

Die Funktionseinheit F5 kann ferner vorsehen, dass die ermittelten Relevanzen verglichen werden und die höchste Relevanz ermittelt wird. Diese Information kann dann an die Funktionseinheit F3 weitergegeben werden, die entscheidet, welche Information an weitere Benutzer 4 der Gesamtmenge zu übermitteln ist. Erfindungsgemäß ist dies die Information, die die höchste Relevanz hat.

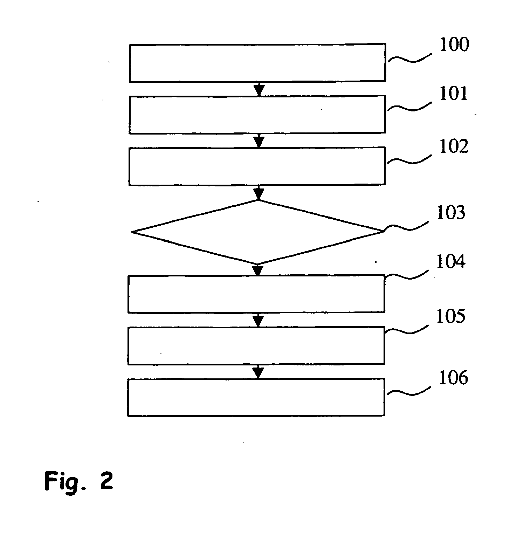

In Figur 2 ist eine erste Ausführungsform des erfindungsgemäßen Verfahrens schematisch dargestellt. Das Verfahren beginnt in einem Schritt 100, in dem eine erste Information 7 und eine zweite Information 7, beispielsweise mittels eines Zufallsprinzips aus der Informationsdatenbank 6 ausgewählt werden. Die erste und zweite Information 7 können auch bezüglich deren Aktualität ausgewertet werden, so dass die aktuellsten Informationen 7 in der Informationsdatenbank 6 ausgewählt werden. Ferner kann vorgegeben sein, dass ein bestimmter Typ oder eine bestimmte Klasse von Informationen ausgewählt werden soll. Soll beispielsweise eine Produktinformation ausgewählt werden, so können besonders preisreduzierte Produkte ausgewählt werden oder es können Produkte ausgewählt werden, für die ein Abverkauf erfolgen soll. Sollen aktuelle Nachrichten ausgewählt werden, so können beispielsweise die aktuellsten politischen Nachrichten ausgewählt werden oder die aktuellsten kulturellen Nachrichten.

Insbesondere können in dem Schritt 100 eine Mehrzahl von Informationen 7 ausgewählt werden. Eine Mehrzahl von Informationen 7 kann dann zu einer Mehrzahl von Benutzern 4 einer ersten Untermenge übermittelt werden. Dies bedeutet, dass die Reaktionen auf eine Mehrzahl von Informationen erfasst und ausgewertet werden können und von dieser Mehrzahl von Informationen dann mehrere oder eine Information 7 mit besonders hoher Relevanz ausgewählt werden können, die dann an beispielsweise die noch verbleibenden Benutzer 4 der Gesamtmenge übermittelt werden.

In einem Schritt 101 werden die ausgewählten Informationen an eine erste Untermenge von Benutzern 4 und eine zweite Untermenge von Benutzern 4 übermittelt. Sind eine Mehrzahl von Informationen 7 ausgewählt, so kann beispielsweise eine erste Kombination dieser Nachrichten an die Benutzer 4 der ersten Untermenge übermittelt werden, wohingegen die verbleibenden ausgewählten Informationen 7 an die Benutzer 4 der zweiten Untermenge übermittelt werden. Ebenso kann vorgesehen sein, dass die Informationen 7 an die Benutzer 4 einer Mehrzahl von Untermengen übermittelt werden. Ist die Gesamtmenge verhältnismäßig groß und sind eine Vielzahl von unterschiedlichen Informationen 7 zu übermitteln, so kann es besonders vorteilhaft sein, eine Vielzahl von Untermengen vorzusehen, wobei der Umfang jeder einzelnen Untermenge möglicherweise relativ klein ist. So kann bereits sehr rasch beurteilt werden, welche aus der Vielzahl von ausgewählten Informationen 7 eine derartige Relevanz aufweisen, dass diese an die restlichen Benutzer 4 der Gesamtmenge übermittelt werden sollen.

Es kann insbesondere vorgesehen sein, dass vorab für jede Information 7 aus der Mehrzahl von ausgewählten Informationen 7 eine Untermenge von Benutzern 4 beispielsweise dadurch ermittelt wird, dass eine vorgegebene Anzahl von Benutzern automatisch aus der Benutzerdatenbank 8, beispielsweise per Zufall, ausgewählt wird, so dass für jede der Untermengen die der jeweiligen Untermenge zugeordnete ausgewählte Information 7 an die in der Untermenge enthaltenen Benutzer 4 übermittelt werden kann. Selbstverständlich ist es auch möglich, keine bezüglich des Umfangs fest vorgegebenen Untermengen zu bestimmen. Vielmehr entstehen die Untermengen implizit dadurch, dass jede der ausgewählten Informationen 7 an mindestens einen Benutzer 4 übermittelt wird.

Von besonderer Bedeutung ist, dass die Untermengen nicht notwendig disjunkt sein müssen. Dies bedeutet insbesondere, dass ein Benutzer in mehr als nur einer Untermenge enthalten sein kann. Ein Benutzer 4 kann folglich eine Mehrzahl von ausgewählten Informationen 7 enthalten. Die Reaktion des Benutzers 4 auf jede der erhaltenen Informationen 7 kann dann gesondert ausgewertet und der jeweiligen Information 7 zugeordnet werden, so dass die Relevanz jeder Information 7 individuell bestimmt werden kann. Werden mehrere auswählbare Informationen 7 an einen Benutzer 4 übermittelt, so kann damit die Belastung des Kommunikationsnetzwerks 3 nochmals weiter reduziert werden.

In einem Schritt 102 werden die Reaktionen der Benutzer 4 erfasst. Eine Reaktion kann beispielsweise die Aktivierung eines Links sein, der zusammen mit einer ausgewählten Information 7 an einen Benutzer 4 übermittelt worden ist. Ein derartiger Link kann beispielsweise von dem Benutzer 4 aktiviert werden, wenn dieser weiterführende Informationen zu der ausgewählten Information 7 anfordern möchte. Dies ist ein besonders sicheres Indiz dafür, dass die Information 7 für den Benutzer 4 relevant war. Selbstverständlich ist es auch möglich, dem Benutzer 4 ein Mittel zur Verfügung zu stellen, mittels dessen der Benutzer 4 die an ihn übermittelte Information 7 bewerten kann.

Vorzugsweise wird die Ermittlung der Relevanz automatisiert und ohne eine weitere Interaktion mit dem Benutzer 4 durchgeführt.

In einem Schritt 103 wird geprüft, ob die ausgewählten ersten und zweiten Informationen 7 - bzw. falls weitere Informationen ausgewählt worden sind, ob die in dem Schritt 100 initial ausgewählten Informationen - an die Benutzer 4 der jeweiligen Untermengen übermittelt worden sind. Hierzu kann beispielsweise der Umfang der jeweiligen Untermenge, also die Anzahl der darin enthaltenen Benutzer 4, vorab vorgegeben worden sein. Alternativ oder ergänzend ist es auch vorstellbar, dass in dem Schritt 103 für jede der übermittelten Informationen 7 geprüft wird, ob eine ausreichende Anzahl von Reaktionen erfasst worden ist. Dies erhöht das dynamische Verhalten des erfindungsgemäßen Verfahrens, da beispielsweise für jede Information 7 ermittelt werden kann, an wie viele Benutzer 4 diese Information bereits übersandt worden ist und wie viele Reaktionen hierauf erfasst worden sind. Es kann dann bereits früh erkannt werden, ob auf Grundlage der erfassten Reaktionen und der Anzahl der Informationsübermittlungen bereits eine ausreichend zuverlässige Ermittlung einer Relevanz möglich ist.

Ergibt die Prüfung in dem Schritt 103, dass eine ausreichende Anzahl von Reaktionen für die Ermittlung einer Relevanz erfasst worden sind, so wird in einem Schritt 104 eine Auswertung der Reaktionen und eine Ermittlung der Relevanz durchgeführt. Hierbei kann beispielsweise die absolute Anzahl der erfassten Reaktionen herangezogen werden. Ferner kann ein Verhältnis der Informationsübermittlungen und der darauf erhaltenen Reaktionen zur Darstellung einer Relevanz herangezogen werden.

Des Weiteren kann auch die Zeit zwischen der Übersendung einer Information und dem Erhalt einer Reaktion hierauf erfasst und bei der Ermittlung der Relevanz einbezogen werden. Beispielsweise kann eine Reaktion, die innerhalb weniger Minuten nach Übermittlung der Information 7 an den Benutzer 4 von dem Server 1 erfasst worden ist, einen hohen Beitrag zu der Relevanz leisten, wohingegen eine Reaktion, die erst Stunden nach der Übermittlung der ausgewählten Information 7 an den Benutzer 4 von dem Server 1 erfasst worden ist, einen geringeren Beitrag zu der Gesamtrelevanz der Information leisten kann. Ferner können für jede Information mehrere Relevanzen ermittelt werden, die beispielsweise angeben, wie relevant die Information bezüglich der Reaktionen ist, die innerhalb weniger Minuten erfasst worden sind und möglicherweise einer Art Langzeit-Relevanz, die angibt, wie viele Reaktionen absolut oder im Verhältnis zu den übermittelten Informationen 7 innerhalb eines längeren Zeitraums erfasst worden sind.

In einem Schritt 105 werden die Informationen ermittelt, die eine besonders hohe Relevanz aufweisen.

In einem Schritt 106 wird veranlasst, dass zumindest die Information mit der höchsten Relevanz an die weiteren Benutzer 4 übermittelt wird. Die weiteren Benutzer 4 sind beispielsweise diejenigen Benutzer 4, an die Informationen im Zuge einer Newsletter-Kampagne übermittelt werden sollen. Hierbei kann nun vorgesehen sein, dass jedenfalls an alle noch verbleibenden Benutzer 4 aus der Gesamtmenge der für die Newsletter-Kampagne vorgesehenen Benutzer 4 die höchst relevante Information übermittelt wird. Selbstverständlich ist es vorstellbar, dass weitere Informationen 7 an die noch verbleibenden Benutzer 4 übermittelt werden oder dass die höchst relevante Information auch an Benutzer 4 übermittelt wird, die bereits eine weniger relevante Information übermittelt bekommen haben. Letzteres ist insbesondere dann vorteilhaft, wenn eine deutliche Differenz bezüglich der ermittelten Relevanzen zwischen den initial ausgewählten Informationen 7 und den übermittelten Informationen 7 festgestellt werden kann.

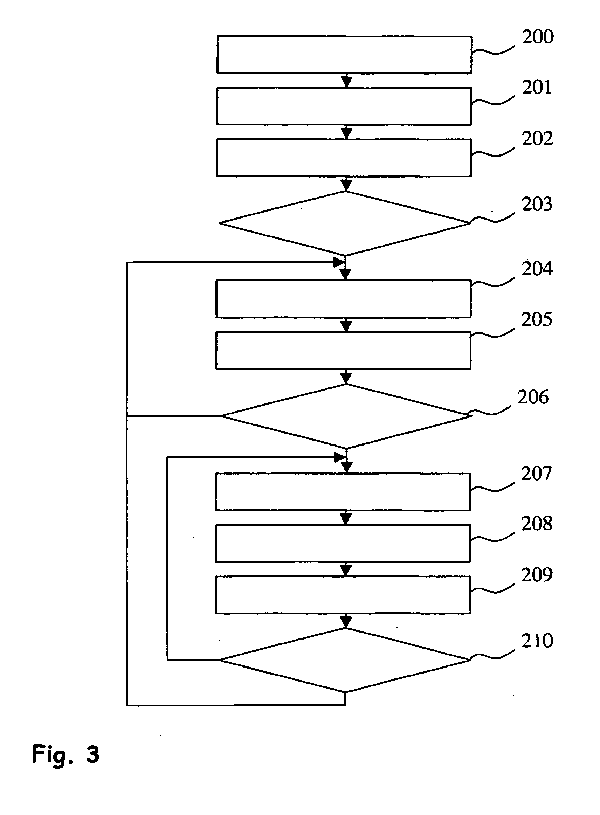

In Figur 3 ist ein weiteres Ausführungsbeispiel eines Ablaufdiagramms des erfindungsgemäßen Verfahrens schematisch dargestellt. Das Verfahren beginnt in einem Schritt 200, in dem eine Mehrzahl von Informationen initial ausgewählt werden. Dies kann beispielsweise analog zu dem Schritt 100 des in Figur 2 dargestellten Verfahrens erfolgen.

In einem Schritt 201 werden die in dem Schritt 200 ausgewählten Informationen an einige Benutzer 4, die aus der Benutzerdatenbank 8 ermittelt worden sind, übermittelt. Dies kann beispielsweise in Form eines Newsletters erfolgen, der per E-Mail von dem Server 1 an einige der Clients 2 und damit an einige der Benutzer 4 übermittelt wird. Ferner ist es vorstellbar, dass für die Benutzer 4 eine Seite eines Online-Katalogs dynamisch derart zusammengestellt wird, dass die in dem Schritt 200 ausgewählte Information 7 an den jeweiligen Benutzer 4 übermittelt wird, wenn dieser die entsprechende Seite des Online-Katalogs anfordert. Die entsprechende Seite kann hierbei insbesondere die erste Seite sein, die ein Benutzer 4 von dem Online-Katalog anfordert. Die Seite kann jedoch auch eine weitere Seite des Online-Katalogs sein, die ein Benutzer 4 anfordert, nachdem er bereits eine andere Seite des Online-Katalogs angefordert hat. Dies bedeutet, dass für jeden Benutzer 4 unterschiedliche Seiten des Online-Katalogs dynamisch erstellt werden können, wobei die Informationen auf jeder der dynamisch erstellten Seiten des Online-Katalogs stets von besonders hoher Relevanz sind.

In einem Schritt 202 werden die Reaktionen der Benutzer 4 auf die ihnen dargestellte Information 7 erfasst und ausgewertet. In einem Schritt 203 wird geprüft, ob bereits eine ausreichend genaue Angabe der jeweiligen Relevanz der ausgewählten und an die Clients 2 übermittelten Informationen möglich ist. Hierbei kann für jede der Mehrzahl der ausgewählten Informationen 7 individuell geprüft werden, ob beispielsweise das Verhältnis der übermittelten Informationen und der hierauf erfolgten und erfassten Reaktionen ausreichend ist, um eine Relevanz für diese bestimmte Information zu bestimmen. Für jede Information 7, für die das der Fall ist, wird zu dem Schritt 204 verzweigt. Für Informationen 7, bei denen noch eine Relevanz noch nicht zuverlässig ermittelbar ist, kann vorgesehen sein, dass zu dem Schritt 201 zurückverzweigt wird und die jeweilige Information 7 an weitere Benutzer 4 übermittelt wird.

Alternativ oder ergänzend hierzu kann auch vorgesehen sein, dass zu dem Schritt 202 verzweigt wird und weitere Reaktionen zu diesen bestimmten Informationen 7 erfasst werden. Dies bedeutet, dass auf weitere Reaktionen gewartet wird, falls noch keine ausreichend genaue Bestimmung eine Relevanz möglich scheint.

In dem Schritt 204 wird die Information mit der höchsten Relevanz ermittelt und zumindest an die Benutzer 4 der Gesamtmenge übermittelt, an die noch keine Information 7 übermittelt worden ist. Insbesondere kann vorgesehen sein, dass die höchst relevante Information an alle Benutzer 4 übermittelt wird, die diese Information noch nicht erhalten haben.

In einem Schritt 205 werden dann wiederum Reaktionen auf die in dem Schritt 204 übermittelten Informationen 7 erfasst und es wird die Relevanz dieser Information nochmals ermittelt bzw. aktualisiert.

In einem Schritt 206 wird dann geprüft, ob die Relevanz sich verringert. Ist dies nicht der Fall, so wird zu dem Schritt 204 zurückverzweigt und diese Information wird weiterhin an die noch verbleibenden Benutzer übermittelt.

Wird in dem Schritt 206 jedoch eine Verringerung der Relevanz festsgestellt, so wird zu einem Schritt 207 verzweigt. Eine Verringerung der Relevanz kann beispielsweise dann eintreten, wenn die Information eine besonders aktuelle Nachricht ist. Innerhalb einer bestimmten Zeitspanne zeigt sich beispielsweise, dass viele Benutzer möglicherweise aus anderen Quellen bereits von dieser Information erfahren haben, so dass diese nicht mehr aktuell ist. Eine derartige Information weiterhin an Benutzer 4 zu übermitteln, wäre folglich nicht sinnvoll, da diese für die Benutzer nicht mehr relevant ist und damit lediglich eine unnötige Belastung des Kommunikationsnetzwerks 3 erzeugt werden würde. In diesem Fall wird in dem Schritt 207 automatisch eine weitere Information 7 ausgewählt. Eine derartige Information 7 kann beispielsweise wie in dem Schritt 200 dargestellt, ausgewählt werden. Insbesondere kann jedoch auch vorgesehen sein, eine Information auszuwählen, die bereits in dem Schritt 201 übermittelt worden ist, jedoch eine niedrigere Relevanz in dem Schritt 202 aufwies.

In einem Schritt 208 wird dann die nun ausgewählte Information 7 an die Client 2 bzw. die Benutzer 4 übermittelt.

In einem Schritt 209 wird die Relevanz durch Erfassen und Auswerten der Reaktionen auf diese Information bestimmt und es wird in einem Schritt 210 geprüft, ob die in dem Schritt 209 erfasste Relevanz die höchste Relevanz darstellt. Ist dies nicht der Fall, so kann zu dem Schritt 207 zurückverzweigt werden. Ist dies jedoch der Fall, so kann zu dem Schritt 204 verzweigt werden, in dem nun die in dem Schritt 207 ausgewählte und sich als höchst relevant erwiesene Information an die weiteren Benutzer übermittelt wird.

Das Verfahren endet jedenfalls dann, wenn eine bestimmte Information, die aktuell als die höchst relevante Information eingeschätzt wird, an alle Benutzer der Gesamtmenge übermittelt worden ist.

Bezüglich des erfindungsgemäßen Verfahrens sind eine Vielzahl weiterer Ausführungsformen denkbar. Beispielsweise kann ausgehend von dem in Figur 3 dargestellten Verfahren vorgesehen sein, dass die Schritte 207 bis 210 parallel zur zu den Schritten 204 bis 206 ausgeführt werden. Dies bedeutet, dass - beispielsweise durch einen zufallsprozess gesteuert - eine weitere Information aus den auswählbaren Informationen 7 ausgewählt wird und an eine zufällig bestimmte, weitere Untermenge von Benutzern 4 übermittelt wird. Dies kann beispielsweise dadurch realisiert werden, dass in zufälligen oder fest vorgegebenen Abständen die weitere Information an einen Benutzer an Stelle der höchst relevanten Information übermittelt wird. Es wird dann die Reaktion dieses Benutzers erfasst und aufgrund der so erfassten Reaktionen die Relevanz der weiteren Informationen ermittelt. Zeigt sich hierbei, dass diese Relevanz höher ist als die aktuell höchste Relevanz, so kann die bisherige höchst relevante Information durch die neu ermittelte höchst relevante Information ersetzt werden. Insbesondere kann auch vorgesehen sein, die neu hinzugekommene höchst relevante Information ergänzend an die Benutzer 4 zu übermitteln.

Das erfindungsgemäße Verfahren ermöglicht folglich eine automatische Auswahl von höchst relevanten Informationen, wobei während der Übermittlung der relevanten Informationen stets automatisch geprüft wird, ob diese Informationen noch eine ausreichend hohe Relevanz haben und insbesondere auch geprüft werden kann, ob möglicherweise eine andere Information eine noch höhere Relevanz hat. Damit wird erreicht, dass sich beispielsweise während einer Newsletter-Kampagne oder während eine Mehrzahl von Benutzern in einem Online-Katalog blättern, die Inhalte der Newsletter bzw. der einzelnen Seite des Online-Katalogs ändern können, so dass stets höchst relevante Informationen dargestellt werden.

Es wird also die Übermittlung einer Vielzahl von niedrigrelevanten Informationen und eine separate Anforderung von hochrelevanten Informationen dadurch vermieden, dass automatisch stets möglichst hochrelevante Informationen an die Benutzer übermittelt werden. Das erfindungsgemäße Verfahren hebt sich auch dadurch vom Stand der Technik ab, dass nicht vorab unterschiedliche Testmengen realisiert werden müssen, Ergebnisse ausgewertet werden müssen und auf Grundlage dieser Testergebnisse dann einzelne Kampagnen gestartet werden müssen, sondern dass beispielsweise Newsletter-Kampagnen oder Online-Kataloge völlig dynamisch erstellt werden können und insbesondere die darzustellenden Informationen zu jedem Zeitpunkt bezüglich der Relevanz aktualisiert werden können, so dass zu jedem Zeitpunkt eine möglichst hohe Relevanz erreicht wird, ohne manuelle Interaktion und insbesondere ohne die Vorgabe von statistischen Grenzwerten und ohne externe Kontrolle während der Durchführung der Kampagne oder der Anforderung eines Online-Katalogs bzw. einzelner Seiten hiervon.

Das erfindungsgemäße Verfahren kann in Form eines Computerprogramms realisiert werden, das auf dem Server 1 abläuft. Hierbei können die einzelnen Funktionalitäten selbstverständlich anders zusammengefasst werden, als dies in Figur 1 exemplarisch dargestellt ist.

Gemäß einer weiteren Ausführungsform des erfindungsgemäßen Verfahrens werden zunächst Links zu den Informationen 7 an alle Benutzer beispielsweise mittels eines Newsletters oder eines Online-Katalogs übermittelt. Es werden dann von den Benutzern die Links aktiviert und dadurch die Informationen 7 angefordert. Hierbei verweisen die Links auf mindestens zwei unterschiedliche Informationen. Sobald eine ausreichende Anzahl von Links aktiviert worden ist oder wenn eine vorgegebene Zeitspanne verstrichen ist, wird eine optimierte Information 7 in Abhängigkeit von der Auswertung von Reaktionen der Benutzer ermittelt. Wird der Link dann von weiteren Benutzern aktiviert, so verweist dieser dann auf die optimierte Information 7. Ein derartiger Link kann auch auf die Seite eines Online-Katalogs verweisen. Dies ermöglicht es, den Inhalt eines Online-Katalogs oder eines Newsletters dynamisch zu optimieren.

## Patentansprüche

1. Verfahren zur Auswahl von von einem Server (1) an eine vorgebbare Gesamtmenge von Benutzern (4) zu übermittelnden Informationen (7), bei dem Reaktionen ausgewertet werden und eine Relevanz der jeweiligen Information (7) ermittelt wird, derart ausgestaltet, dass
- automatisch mindestens zwei unterschiedliche Informationen (7) ausgewählt werden,
- die erste Information (7) an Benutzer (4) einer ersten Untermenge der Gesamtmenge übermittelt wird und die zweite Information (7) an eine zweite Untermenge der Gesamtmenge übermittelt wird,
- eine Reaktion der Benutzer (4) der ersten Untermenge und der zweiten Untermenge auf die empfangene Information (7) automatisch zumindest solange erfasst wird, bis ein vorgebbares Ereignis eingetreten ist,
- Reaktionen automatisch ausgewertet werden,
**dadurch gekennzeichnet, dass**
- die Information (7) mit höchster Relevanz an die Benutzer (4) einer dritten Untermenge der Gesamtmenge übermittelt werden,
- mindestens eine ausgewählte weitere Information (7) an Benutzter (4) einer weiteren Untermenge übermittelt wird, die Reaktionen hierauf erfasst werden, eine Relevanz der weiteren Information (7) ermittelt wird und zumindest wenn die Relevanz der weiteren Information (7) die vorherig höchste Relevanz überschreitet, die weitere Information (7) zumindest an diejenigen Benutzer (4) übermittelt wird, an die noch keine. Information (7) übermittelt worden ist.

2. Verfahren nach Anspruch 1, **dadurch gekennzeichnet, dass** zusammen mit der höchstrelevanten Information (7) eine weiterführende Information (7) an die Benutzer (4) der dritten Untermenge übermittelt wird.

3. Verfahren nach einem der vorangehenden Ansprüche, **dadurch gekennzeichnet, dass** das Ereignis
- den Ablauf einer vorgebbaren Zeitspanne beschreibt;
- die Erfassung einer vorgegebenen Anzahl von Reaktionen beschreibt; oder
- eine vorgebbare Differenz der ermittelten Relevanzen beschreibt.

4. Verfahren nach einem der vorangehenden Ansprüche, **dadurch gekennzeichnet, dass** weitere Informationen (7) an weitere Untermengen gesendet werden, die Reaktionen der Benutzer (4) auf die empfangenen weiteren Information (7) erfasst werden, die Relevanzen der weiteren Information ermittelt werden und zumindest die Information mit der geringsten Relevanz an keinen Benutzer (4) mehr übermittelt wird.

5. Verfahren nach einem der vorangehenden Ansprüche, **dadurch gekennzeichnet, dass** die erste Untermenge automatisch gebildet wird durch die Benutzer (4), an die bis zu dem Eintritt des Ereignisses bereits die erste Information (7) übermittelt wurde, und die zweite Untermenge automatisch gebildet wird durch die Benutzer (4), an die bis zu dem Eintritt des Ereignisses bereits die zweite Information (7) übermittelt wurde.

6. Verfahren nach einem der vorangehenden Ansprüche, **dadurch gekennzeichnet, dass** die erste Untermenge und die zweite Untermenge zufällig ausgewählt werden.

7. Verfahren nach einem der vorangehenden Ansprüche, **dadurch gekennzeichnet, dass** die weitere Information (7) ausgewählt wird
- zufällig aus einer vorgebbaren Menge von Informationen (7); und/oder
- unter Berücksichtigung von Profilinformationen zumindest von Benutzern (4) der dritten Untermenge.

8. Verfahren nach einem der vorangehenden Ansprüche, **dadurch gekennzeichnet, dass** die Information (7) mit aktuell höchster Relevanz auch an die Benutzer (4) übermittelt wird, an die bereits eine Information (7) mit geringerer Relevanz übermittelt worden ist.

9. Verfahren nach einem der vorangehenden Ansprüche, **dadurch gekennzeichnet, dass** die Informationen (7) klassifiziert sind und bei einem erneuten Durchlauf des Verfahrens eine erste Information (7) ausgewählt wird, die derselben Klasse zugeordnet ist wie die in dem vorausgegangenen Durchlauf ermittelte Information (7) mit der höchsten Relevanz.

10. Verfahren nach einem der vorangehenden Ansprüche, **dadurch gekennzeichnet, dass** die Informationen (7) übermittelt werden durch
- email;
- Newsletter;
- Landing-page; oder
- Seiten eines Online-Katalogs.

11. Verfahren nach einem der vorangehenden Ansprüche, **dadurch gekennzeichnet, dass** die Benutzer (4) der dritten Untermenge oder der Gesamtmenge dynamisch ermittelt werden.

12. Verfahren nach einem der vorangehenden Ansprüche, **dadurch gekennzeichnet, dass** die Informationen (7) bezüglich möglicher Profilinformationen klassifiziert sind, für eine Mehrzahl von möglichen Klassen höchstrelevante Informationen (7) ermittelt werden und einem Benutzer (4) zumindest diejenigen höchstrelevanten Informationen (7) übermittelt werden, deren Klasse den dem Benutzer (4) zugeordneten Profilinformationen entsprechen.

13. Client-Server System umfassend einen Server (1) und eine Mehrzahl von über ein Kommunikationsnetzwerk (3) verbindbaren Clients (2), wobei der Server (1) Mittel (F1) zur Auswahl von von dem Server (1) an eine vorgebbare Gesamtmenge von Clients (2) zu übermittelnden Informationen (7) umfasst, und der Server (1) Mittel (F5) zur Auswertung erfasster Reaktionen und zur Ermittlung einer Relevanz der jeweiligen Information (7) aufweist; derart ausgestaltet, dass
- der Server (1) Mittel (F1) zur automatischen Auswahl von mindestens zwei unterschiedlichen Informationen (7) umfasst;
- der Server (1) Mittel (F3) zur Übermittlung der ersten Information (7) an Clients (2) einer ersten Untermenge der Gesamtmenge und zur Übermittlung der zweiten Information (7) an Clients (2) einer zweiten Untermenge der Gesamtmenge aufweist;
- der Server (1) Mittel (F4) aufweist zur automatischen Erfassung einer von den Clients (2) der ersten Untermenge und den Clients (2) der zweiten Untermenge übermittelten Reaktion auf die jeweils empfangene Information (7), wobei die Reaktionen zumindest solange erfassbar sind, bis ein vorgebbares Ereignis eingetreten ist;
- der Server (1) Mittel (F5) zur automatischen Auswertung erfasster Reaktionen aufweist; und **dadurch gekennzeichnet, dass**
- der Server (1) Mittel (F3) zur Übermittlung der Information (7) mit der höchsten Relevanz an Clients (2) einer dritten Untermenge der Gesamtmenge aufweist; und
- der Server Mittel aufweist, um mindestens eine ausgewählte weitere Information an Benutzer einer weiteren Untermenge zu übermitteln, die Reaktionen hierauf zu erfassen, eine Relevanz der weiteren Information zu ermitteln und zumindest wenn die Relevanz der weiteren Information die weiteren Information zu überschreitet, die weitere Information zumindest an diejenigen Benutzer vorherig höchste Relevanz überschreitet, die weitere Information zumindest an diejenigen Benutzer zu übermitteln, an die noch keine Information übermittelt worden ist.

14. Client-Server System nach Anspruch 13, **dadurch gekennzeichnet, dass** das Client-Server System Mittel zur Durchführung eine Verfahrens nach einem der Ansprüche 2 bis 12 aufweist.

15. Computerprogramm, das auf einem Client-Server System, insbesondere einem Server (1), ablauffähig ist, **dadurch gekennzeichnet, dass** ein Verfahren nach einem der Ansprüche 1 bis 12 ausgeführt wird, wenn das Computerprogramm auf dem Client-Server System abläuft und dass das Computerprogramm auf einem Speicherelement, insbesondere auf einem optischen oder magnetischen Speicherelement, abgespeichert ist.

## Claims

1. Method of selecting items of information (7) to be transmitted by a server (1) to a presettable full set of users (4), in which reactions are analysed and a relevance is determined for each item of information (7), of a form such that
- at least two different items of information (7) are automatically selected,
- the first item of information (7) is transmitted to users (4) belonging to a first sub-set of the full set and the second item of information (7) is transmitted to a second sub-set of the full set,
- a reaction by the users (4) belonging to the first sub-set and the second sub-set to the item of information (7) received is automatically detected until such time as a presettable event has occurred,
- reactions are automatically analysed,
**characterised in that**
- the item of information (7) of greatest relevance is transmitted to the users (4) belonging to a third sub-set of the full set,
- at least one selected further item of information (7) is transmitted to users (4) belonging to a further sub-set, the reactions thereto are detected, a relevance of the further item of information (7) is determined and, at least if the relevance of the further item of information (7) is greater than the greatest previous relevance, the further item of information (7) is transmitted at least to those users (4) to whom no item of information (7) has yet been transmitted.

2. Method according to claim 1, **characterised in that** an item of additional information (7) is transmitted to the users (4) belonging to the third sub-set together with the item of information (7) of greatest relevance.

3. Method according to either of the preceding claims, **characterised in that** the event
- marks the expiry of a presettable period of time,
- marks the detection of a presettable number of reactions, or
- indicates a presettable difference between the relevances determined.

4. Method according to one of the preceding claims, **characterised in that** further items of information (7) are transmitted to further sub-sets, the reactions of the users (4) to the further items of information received are detected, the relevances of the further items of information (7) are determined, and at least the item of information of least relevance is no longer sent to any user (4).

5. Method according to one of the preceding claims, **characterised in that** the first sub-set is automatically formed by the users (4) to whom the first item of information (7) has already been transmitted by the time the event occurs, and the second sub-set is automatically formed by the users (4) to whom the second item of information (7) has already been transmitted by the time the event occurs.

6. Method according to one of the preceding claims, **characterised in that** the first sub-set and the second sub-set are randomly selected.

7. Method according to one of the preceding claims, **characterised in that** the further item of information (7) is selected
- randomly from a presettable set of items of information (7), and/or
- in the light of items of profile information relating at least to users (4) belonging to the third sub-set.

8. Method according to one of the preceding claims, **characterised in that** the item of information (7) of the greatest current relevance is also transmitted to those users (4) to whom an item of information (7) of lesser relevance has already been transmitted.

9. Method according to one of the preceding claims, **characterised in that** the items of information (7) are classified and in a fresh run of the method a first item of information (7) is selected which belongs to the same class as the item of information (7) of the greatest relevance which was determined in the previous run.

10. Method according to one of the preceding claims, **characterised in that** the items of information (7) are transmitted by
- e-mail,
- newsletter,
- landing page, or
- pages of an on-line catalogue.

11. Method according to one of the preceding claims, **characterised in that** the users (4) belonging to the third sub-set or the full set are determined dynamically.

12. Method according to one of the preceding claims, **characterised in that** the items of information (7) relating to possible profile information are classified, items of information (7) of the greatest relevance to a plurality of possible classes are determined, and at least those items of information (7) of the greatest relevance whose class corresponds to the profile information associated with a user (4) are sent to the user (4).

13. Client-server system comprising a server (1) and a plurality of clients (2) able to be connected via a communications network (3), the server (1) comprising means (F1) for selecting items of information (7) to be transmitted by the server (1) to a presettable full set of clients (2), and the server (1) having means (F5) for analysing reactions which are detected and for determining a relevance of each item of information (7), of a form such that
- the server (1) comprises means (F1) for automatically selecting at least two different items of information (7),
- the server (1) has means (F3) for transmitting the first item of information (7) to clients (2) belonging to a first sub-set of the full set and for transmitting the second item of information (7) to clients (2) belonging to a second sub-set of the full set,
- the server (1) has means (F4) for automatically detecting a reaction to the items of information (7) respectively received which is transmitted by the clients (2) belonging to the first sub-set and the clients (2) belonging to the second sub-set, the reactions being able to be detected at least until a presettable event has occurred,
- the server (1) has means (F5) for automatically analysing reactions which are detected, and
**characterised in that**
- the server (1) has means (F3) for transmitting the item of information (7) of the greatest relevance to clients (2) belonging to a third sub-set of the full set, and
- the server has means for transmitting at least one selected further item of information to users belonging to a further sub-set, for detecting reactions thereto, for determining a relevance of the further item of information, and for transmitting the further item of information at least to those users to whom no item of information has yet been transmitted at least if the relevance of the further item of information is greater than the greatest previous relevance.

14. Client-server system according to claim 13, **characterised in that** the client-server system has means for carrying out a method according to one of claims 2 to 12.

15. Computer program which can be run on a client-server system and in particular on a server (1), **characterised in that** a method according to one of claims 1 to 12 is carried out when the computer program runs on the client-server system, and **in that** the computer program is stored on a storage member and in particular on an optical or magnetic storage member.

## Revendications

1. Procédé de sélection d'informations (7) destinées à être transmises par un serveur (1) à un nombre total prédéfinissable d'utilisateurs (4), dans lequel des réactions sont évaluées et une pertinence de chaque information (7) est déterminée, configuré de telle façon que
- au moins deux informations (7) différentes sont automatiquement sélectionnées,
- la première information (7) est transmise à des utilisateurs (4) d'un premier sous-ensemble de la quantité totale et la deuxième information (7) est transmise à un deuxième sous-ensemble de la quantité totale,
- une réaction des utilisateurs (4) du premier sous-ensemble et du deuxième sous-ensemble à l'information (7) reçue est automatiquement détectée au moins jusqu'à ce qu'un événement prédéfinissable se soit produit,
- les réactions sont automatiquement évaluées, **caractérisé en ce que**
- l'information (7) la plus pertinente est transmise aux utilisateurs (4) d'un troisième sous-ensemble de la quantité totale,
- au moins une autre information (7) sélectionnée est transmise à des utilisateurs (4) d'un autre sous-ensemble, les réactions à cette autre information sont détectées, une pertinence de l'autre information (7) est déterminée et, au moins lorsque la pertinence de l'autre information (7) dépasse la pertinence précédemment la plus élevée, l'autre information (7) est transmise au moins à ceux des utilisateurs (4) auxquels aucune information (7) n'a encore été transmise.

2. Procédé selon la revendication 1, **caractérisé en ce que**, en même temps que l'information (7) la plus pertinente, une information (7) complémentaire est transmise aux utilisateurs (4) du troisième sous-ensemble.

3. Procédé selon l'une des revendications précédentes, **caractérisé en ce que** l'événement
- décrit la fin d'un intervalle de temps prédéfinissable;
- décrit la détection d'un nombre prédéfini de réactions; ou
- décrit une différence prédéfinissable des pertinences déterminées.

4. Procédé selon l'une des revendications précédentes, **caractérisé en ce que** d'autres informations (7) sont envoyées à d'autres sous-ensembles, les réactions des utilisateurs (4) aux autres informations (7) reçues sont détectées, les pertinences des autres informations sont déterminées et au moins l'information dont la pertinence est la plus faible n'est plus transmise à aucun utilisateur (4).

5. Procédé selon l'une des revendications précédentes, **caractérisé en ce que** le premier sous-ensemble est automatiquement formé par les utilisateurs (4) auxquels la première information (7) a déjà été transmise jusqu'à la survenue de l'événement et le deuxième sous-ensemble est automatiquement formé par les utilisateurs (4) auxquels la deuxième information (7) a déjà été transmise jusqu'à la survenue de l'événement.

6. Procédé selon l'une des revendications précédentes, **caractérisé en ce que** le premier sous-ensemble et le deuxième sous-ensemble sont sélectionnés de manière aléatoire.

7. Procédé selon l'une des revendications précédentes, **caractérisé en ce que** l'autre information (7) est sélectionnée
- de manière aléatoire à partir d'une quantité prédéfinissable d'informations (7); et/ou
- en tenant compte d'informations de profil au moins d'utilisateurs (4) du troisième sous-ensemble.

8. Procédé selon l'une des revendications précédentes, **caractérisé en ce que** l'information (7) actuellement la plus pertinente est transmise également aux utilisateurs (4) auxquels une information (7) de pertinence moindre a déjà été transmise.

9. Procédé selon l'une des revendications précédentes, **caractérisé en ce que** les informations (7) sont classées et, lors d'un nouveau passage du procédé, une première information (7) associée à la même classe que l'information (7) la plus pertinente déterminée lors du précédent passage est sélectionnée.

10. Procédé selon l'une des revendications précédentes, **caractérisé en ce que** les informations (7) sont transmises par
- - courrier électronique;
- newsletter;
- landing page; ou
- des pages d'un catalogue en ligne.

11. Procédé selon l'une des revendications précédentes, **caractérisé en ce que** les utilisateurs (4) du troisième sous-ensemble ou de la quantité totale sont déterminés de manière dynamique.

12. Procédé selon l'une des revendications précédentes, **caractérisé en ce que** les informations (7) sont classées par rapport à d'éventuelles informations de profil, les informations (7) les plus pertinentes pour une pluralité de classes possibles sont déterminées et au moins les informations (7) les plus pertinentes dont la classe correspond aux informations de profil associées à l'utilisateur (4) sont transmises à un utilisateur (4).

13. Système client-serveur comprenant un serveur (1) et une pluralité de clients (2) qui peuvent se connecter par le biais d'un réseau de communication (3), lequel serveur (1) comprend des moyens (F1) pour sélectionner des informations (7) destinées à être transmises par le serveur (1) à un nombre total prédéfinissable de clients (2) et le serveur (1) présente des moyens (F5) pour évaluer les réactions détectées et pour déterminer une pertinence de chaque information (7) ; configuré de telle façon que
- le serveur (1) comprend des moyens (F1) pour sélectionner automatiquement au moins deux informations (7) différentes;
- le serveur (1) présente des moyens (F3) pour transmettre la première information (7) à des clients (2) d'un premier sous-ensemble de la quantité totale et pour transmettre la deuxième information (7) à des clients (2) d'un deuxième sous-ensemble de la quantité totale;
- le serveur (1) présente des moyens (F4) pour détecter automatiquement une réaction à l'information (7) respectivement reçue transmise par les clients (2) du premier sous-ensemble et par les clients (2) du deuxième sous-ensemble, les réactions pouvant être détectées au moins jusqu'à ce qu'un événement prédéfinissable se soit produit;
- le serveur (1) présente des moyens (F5) pour évaluer automatiquement les réactions détectées;
et **caractérisé en ce que**
- le serveur (1) présente des moyens (F3) pour transmettre l'information (7) la plus pertinente à des clients (2) d'un troisième sous-ensemble de la quantité totale; et
- le serveur (1) présente des moyens pour transmettre au moins une autre information sélectionnée à des utilisateurs d'un autre sous-ensemble, pour détecter les réactions à cette autre information, pour déterminer une pertinence de ladite autre information et, au moins lorsque la pertinence de l'autre information dépasse la pertinence précédemment la plus élevée, pour transmettre ladite autre information au moins à ceux des utilisateurs auxquels aucune information n'a encore été transmise.

14. Système client-serveur selon la revendication 13, **caractérisé en ce que** le système client-serveur présente des moyens pour mettre en oeuvre un procédé selon l'une des revendications 2 à 12.

15. Programme informatique exécutable sur un système client-serveur, en particulier un serveur (1), **caractérisé en ce qu'**un procédé selon l'une des revendications 1 à 12 est mis en oeuvre lorsque le programme informatique est exécuté sur le système client-serveur et **en ce que** ledit programme informatique est stocké sur un élément de stockage, en particulier un élément de stockage optique ou magnétique.
